Europäisches Patentamt

European Patent Office

Office européen des brevets

(19)

(11) **EP 1 331 783 A2**

(12) **EUROPEAN PATENT APPLICATION**

(43) Date of publication:
**30.07.2003 Bulletin 2003/31**

(51) Int Cl.⁷: **H04L 27/26**

(21) Application number: **03002031.7**

(22) Date of filing: **28.01.2003**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(30) Priority: **29.01.2002 KR 2002005235**

(71) Applicant: **Samsung Electronics Co., Ltd.
Suwon-city, Gyunggi-do (KR)**

(72) Inventor: **Kwon, Yong-sik
Seongdong-gu, Seoul (KR)**

(74) Representative: **Grünecker, Kinkeldey,
Stockmair & Schwanhäusser Anwaltssozietät
Maximilianstrasse 58
80538 München (DE)**

(54) **Apparatus and method for recovering symbol timing in OFDM receiver**

(57)    An apparatus for recovering symbol timings in an OFDM receiver is disclosed. The apparatus for recovering symbol timing has an offset detecting unit for estimating symbol timing offset values from a fast Fourier-transformed OFDM signal; an interference detecting unit for detecting an inter-symbol interferences of the OFDM signal based on the symbol timing offset values; an offset difference calculating unit for subtracting a second symbol timing offset value consecutive to a first symbol timing offset value from the first symbol timing offset value already inputted from the symbol timing offset values and calculating sampling offsets of the OFDM signal; an interpolator for compensating a sampling timing of the OFDM signal in accordance with the sampling offsets calculated from the offset difference calculating unit; and a window adjusting unit for adjusting a window timing of the OFDM signal based on the inter-symbol interferences detected from the interference detecting unit.

## FIG.1

Printed by Jouve, 75001 PARIS (FR)

EP 1 331 783 A2

**Description**

The present invention relates to apparatus and method for recovering symbol timing in the orthogonal frequency division multiplexing(OFDM) receiver, and more particularly to apparatus and method for recovering symbol timing in the OFDM receiver which compensate offsets introduced during recovery of a received OFDM signal.

In general, a broadcasting system for a high definition television(HDTV) is mainly divided into an image coding part and a modulating part. The image coding part compresses into data of 15 ~18 Mbps digital data of about 1Gbps obtained from a high definition image source. The modulating part transmits the digital data of tens of Mbps to a receiving side through a limited bandwidth channel of 6 ~ 8 MHz.

Generally, the high definition television broadcast of a digital system employs a terrestrial broadcasting system which uses channels of Very High Frequency (VHF)/Ultra High Frequency(UHF) bandwidths allocated for existing television broadcasts. Therefore, the modulating mode used for the high definition television broadcasting system should satisfy the following conditions due to the terrestrial broadcasting environments.

First, the modulating mode used for the high definition television broadcasting system should have a high spectrum efficiency in order to transmit the digital data of tens of Mbps to a receiving side through the limited bandwidth channel of 6 ~ 8 MHz. Second, the modulating mode used for the high definition television broadcasting system undergoes the multipath fading due to ambient buildings, structures, and the like, so it should have characteristics robust on the fading. Third, the modulating mode used for the high definition television broadcasting system inevitably undergoes the co-channel interference due to an existing analog television signal, so it should have characteristics robust on the co-channel interference. Further, a digital modulating signal of the high definition television system should be able to minimize the interference with the existing analog television receiver.

As the modulating techniques satisfying such conditions, there exist the quadrature amplitude modulation(QAM), and vestigial side band modulation(VSB). The Europe chooses as a next-generation ground broadcasting system for the high definition television the orthogonal frequency division multiplexing(OFDM) system of a digital modulating mode which enables a double effect of a transmission rate enhancement per bandwidth and interference preventions to be obtained.

The OFDM mode is a mode which converts a stream of symbols inputted in a series fashion into parallel data of a block unit and then multiplexes the parallel symbols into different subcarrier frequencies. Such a OFDM mode uses multi-carrier and has a significant difference from the existing single carrier mode. The multi-carrier has a property orthogonal to one another. The orthogonal property means a property that a product of two carriers makes a '0', which becomes a necessary condition enabling to use multi-carriers. The OFDM mode is implemented with the fast Fourier transform (FFT) and the inverse fast Fourier transform(IFFT), which is simply obtained by the orthogonal property and the definition of the fast Fourier transform among the carriers.

In the meantime, the advantages of the OFDM mode are as follows. That is, the terrestrial television transmission mode has channel characteristics that the transmission quality is influenced by reflection waves, co-channel interferences, inter-channel interferences, and so on, occurring upon signal transmission, so the design conditions for the transmission system are very sophisticated. However, the OFDM has characteristics robust on the multipath. That is, since it employs various carriers, symbol transmission time can be prolonged. This means that its performance deterioration is small as to a long-time echo signal since it becomes relatively immune to interference signals due to the multipath. Further, since it has characteristics robust on the existing signals, it undergoes less influence due to the co-channel interference. Such characteristics enable the single frequency network to be constructed. Here, The single frequency network means that one broadcast is carried out with one frequency across the country. Therefore, the same channels experiences severe interferences, but the OFDM mode are so robust against such environments that it can be used. With the use of the single frequency network as such, the limited frequency resources may be efficiently used.

In the meantime, an OFDM signal is composed of multiple carriers, and each carrier has a very narrow bandwidth. Accordingly, the entire spectrum is nearly formed in a rectangular shape, so the frequency efficiency becomes relatively enhanced than the single carrier. Further, the advantage of the OFDM mode undergoes less interferences compared to other broadcasting services like Phase Alternation by Line(PAL) or Sequential Couleur a Memoire (SECAM) for OFDM signals since the waveforms of the OFDM signals are the same as the white Gaussian Noise. Therefore, the OFDM mode can have a different modulating mode for every carrier, enabling a hierarchical transmission.

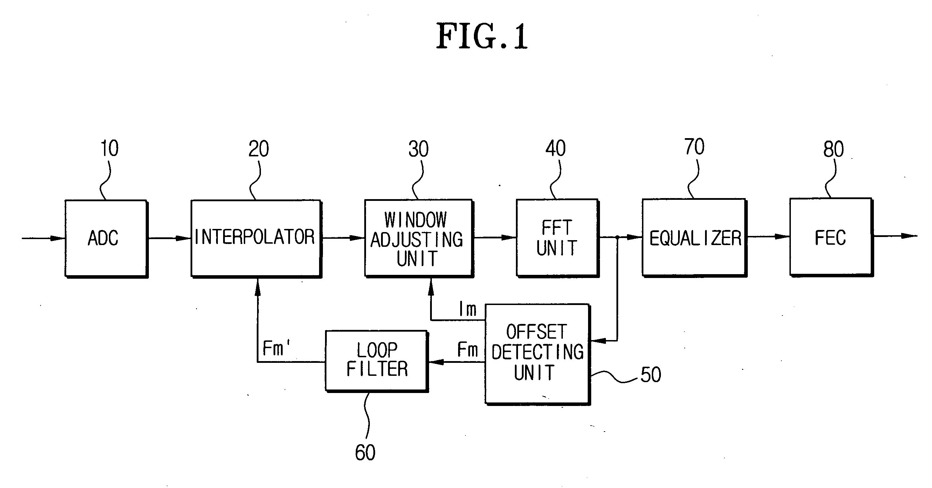

Fig. 1 is a block diagram for showing a conventional OFDM receiver. The OFDM receiver has an analog-to-digital converter(ADC) 10, an interpolator 20, a window adjuster 30, a fast Fourier transforming(FFT) unit 40, an offset detector 50, a loop filter 60, an equalizer 70, and a forward error corrector(FEC) 80.

The ADC 10 converts a received OFDM signal into a digital signal through sampling, quantization, and coding processes. The interpolator 20 compensates a sampling offset of an OFDM signal generated during the sampling process of the ADC 10. The window adjuster 30 adjusts a window start point for carrying out the fast Fourier transform(FFT) with respect to the OFDM signal. The FFT unit 40 carries out the fast Fourier transform as to the OFDM signal converted into a digital signal in the ADC 10. The offset detector 50 detects symbol timing offset values m of the OFDM signal converted by the fast Fourier transform. At this time, the offset detector 50 separates the detected symbol timing offset values m into integer-multiple symbol timing offset values Im and decimal-multiple symbol timing offset values Fm. The loop filter 60 attenuates the decimal-multiple symbol timing offset values Fm into the values within a predetermined range in order for a variation difference between sequentially adjacent values of the decimal-multiple symbol timing offset values Fm to be smoothly maintained. The equalizer 70 compensates the distortions occurring on a transmission channel with respect to an OFDM signal converted by the fast Fourier transform. At this time, the equalizer 70 calculates timing and frequency error values as to the symbols of the OFDM signal based on a pilot signal and then compensates the distortions on the transmission channel of the OFDM signal. The FEC 80 detects errors with an error detecting mode set as to the data of the OFDM signal and corrects the detected errors.

Accordingly, the interpolator 20 compensates a sampling timing based on the decimal-multiple symbol timing offset values outputted from the loop filter 60. The window adjuster 30 adjusts a start point for the fast Fourier transform of the FFT unit 40 based on the integer-multiple symbol timing offset values Im.

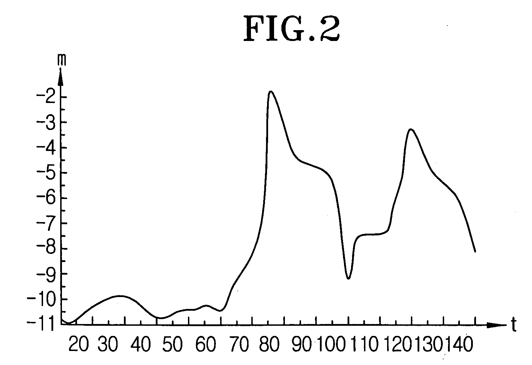

Such a symbol timing recovery of the conventional OFDM receiver is useful for channels such as an Additive White Gaussian Noise(AWGN) channel or a Ricean channel, having small environment variations with time, and for cases having small variations of the detected symbol timing offset values m as in a Rayleigh channel. However, in case of mobile communication channels irregularly changing with time, the variations of the detected symbol timing offset values m severely appear. Fig. 2 is a graph for showing the symbol timing offset values m detected from an OFDM signal transmitted in COST 207.Rural Area being a mobile communication channel by the offset detector 50 of Fig. 1. As shown, in case that the symbol timing offset values m irregularly and severely change, the integer-multiple symbol timing offset values Im have a different value for every symbol of the OFDM signal, so the distortion compensations can not be stably carried out which occur according to the transmission channel environment of the equalizer 70.

In order to solve the above problems, it is an object of the present invention to provide apparatus and method recovering symbol timing in an OFDM receiver capable of stably carrying out symbol timing recoveries in static channel environments as well as in dynamic channel environments.

In order to achieve the above object, an apparatus for recovering symbol timings in an OFDM receiver according to the present invention comprises an offset detecting unit for estimating symbol timing offset values from a fast Fourier-transformed OFDM signal; an interference detecting unit for using the symbol timing offset values and detecting an inter-symbol interferences of the OFDM signal; an offset difference calculating unit for subtracting a second symbol timing offset value consecutive to a first symbol timing offset value from the first symbol timing offset value already inputted from the symbol timing offset values and calculating sampling offsets of the OFDM signal; an interpolator for compensating a sampling timing of the OFDM signal in accordance with the sampling offsets calculated from the offset difference calculating unit; and a window adjusting unit for adjusting a window timing of the OFDM signal based on the inter-symbol interferences detected from the interference detecting unit. Preferably, the offset difference calculating unit includes a delaying unit for delaying for a predetermined time period and outputting the first symbol timing offset value already inputted out of the symbol timing offset values detected from the offset detecting unit until the second symbol timing offset value consecutive to the first symbol timing offset value is inputted; and a subtraction part for subtracting the first symbol timing value from the second symbol timing offset value and calculating the sampling offsets of the OFDM signal.

The apparatus for recovering symbol timings according to the present invention further comprises a loop filter for attenuating the sampling offsets into values within a predetermined range in order to smoothly maintain variation differences among the sequentially adjacent sampling offsets calculated from the subtraction part and providing the attenuated values to the interpolator. Preferably, the inter-symbol interferences detected from the interference detecting unit are integer values, and the sampling offsets attenuated from the loop filter are decimal values. Further, the window adjusting unit adjusts the window timing of the OFDM signal according to the integer values if the integer values corresponding to the inter-symbol interferences detected from the interference detecting unit are larger than '0'.

In the meantime, the above object, according to the present invention, is achieved with an OFDM receiver, comprising an analog-to-digital converter for converting a received OFDM signal to a digital signal; a fast Fourier transform part for carrying out a fast Fourier transform of the OFDM signal being the digital signal; an offset detecting unit for detecting the symbol timing offset values from the fast Fourier-transformed OFDM signal; an interference detecting unit for detecting the inter-symbol interferences of the OFDM signal by using the symbol timing offset values; an offset difference calculating unit for subtracting a second symbol timing offset value consecutive to a first symbol timing offset value from the first symbol timing offset value already inputted from the symbol timing offset values and calculating sampling offsets of the OFDM signal; an interpolator for compensating a sampling timing of the OFDM

**EP 1 331 783 A2**

signal in accordance with the sampling offsets calculated from the offset difference calculating unit; a window adjusting unit for adjusting a window timing of the OFDM signal based on the inter-symbol interferences detected from the interference detecting unit; and an equalization part for compensating transmission distortions as to the fast Fourier-transformed OFDM signal in accordance with channel environments.

Preferably, the offset difference calculating unit includes a delaying unit for delaying for a predetermined time period and outputting the first symbol timing offset value already inputted out of the symbol timing offset values detected from the offset detecting unit until the second symbol timing offset value consecutive to the first symbol timing offset value is inputted; and a subtraction part for subtracting the first symbol timing value from the second symbol timing offset value and calculating the sampling offsets of the OFDM signal.

The OFDM receiver of the present invention further comprises a loop filter for attenuating the sampling offsets into values within a predetermined range in order to smoothly maintain variation differences among the sequentially adjacent sampling offsets calculated from the subtraction part and providing the attenuated values to the interpolator. Further, the inter-symbol interferences detected from the interference detecting unit are integer values, and the sampling offsets attenuated from the loop filter are decimal values. Furthermore, it is desirable that the window adjusting unit adjusts the window timing of the OFDM signal according to the integer values if the integer values corresponding to the inter-symbol interferences detected from the interference detecting unit are larger than '0'.

In the meantime, the above object, according to the present invention, can be attained with a method for recovering symbol timings in use of a symbol timing recovery device, comprising steps of detecting symbol timing offset values from a fast Fourier-transformed OFDM signal; detecting an inter-symbol interferences of the OFDM signal based on the symbol timing offset values; subtracting a second symbol timing offset value consecutive to a first symbol timing offset value from the first symbol timing offset value already inputted from the symbol timing offset values and calculating sampling offsets of the OFDM signal; compensating a sampling timing of the OFDM signal in accordance with the sampling offsets; and adjusting a window timing of the OFDM signal based on the inter-symbol interferences.

Preferably, the step for calculating the sampling offsets includes steps of delaying for a predetermined time period and outputting the first symbol timing offset value already inputted out of the symbol timing offset values detected from the offset detecting unit until the second symbol timing offset value consecutive to the first symbol timing offset value is inputted; and subtracting the first symbol timing value from the second symbol timing offset value and calculating the sampling offsets of the OFDM signal.

The method for recovering symbol timings in use of a symbol timing recovery apparatus of the present invention further comprises, after the step for calculating the sampling offsets, a step for attenuating the sampling offsets into values within a predetermined range in order to smoothly maintain variation differences among the sequentially adjacent sampling offsets. Accordingly, the compensation step compensates the sampling timing of the OFDM signal based on the attenuated sampling offsets. At this time, the inter-symbol interferences are integer values, and the sampling offsets are decimal values. Further, the step for adjusting the window timing adjusts the window timing of the OFDM signal according to the integer values if the integer values corresponding to the inter-symbol interferences are larger than '0'.

With the present invention, the interpolator and the window adjuster compensate and adjust the sampling timing and the window timing of the OFDM signal based on the sampling offsets and the inter-symbol interference, so the OFDM signal can be more stably recovered. Further, the window adjuster determines whether or not the window timing offsets occur based on the integer values corresponding to the inter-symbol interferences provided from the interference detector and then adjusts the window timing, and the interpolator compensates the sampling timing based on the decimal values provided via the offset difference calculator and the loop filter, so that the OFDM signal transmitted in the fixed channel environments and in the dynamic channel environments can be more stably and correctly recovered.

The above object and other features of the present invention will become more apparent by describing in detail a preferred embodiment thereof with reference to the attached drawings, in which:

Fig. 1 is a block diagram for showing a conventional OFDM receiver;

Fig. 2 is a graph for showing symbol timing offset values detected from an OFDM signal transmitted from a mobile communication channel by an offset detector of Fig. 1;

Fig. 3 is a block diagram for showing a symbol timing recovery apparatus of an OFDM receiver according to a preferred embodiment of the present invention;

Fig. 4 is a view for schematically showing a symbol structure of an OFDM signal;

Fig. 5 is a block diagram for showing in detail an offset difference calculator of Fig. 3;

Fig. 6 is a flow chart for showing a symbol timing recovery method using a symbol timing recovery apparatus according to an embodiment of the present invention;

Fig. 7 is a flow chart for showing in detail a process for inter-symbol interferences and sampling offsets of Fig. 6; and

Fig. 8 is a flow chart for showing in detail a process for window timing adjustments and sampling timing compensations of Fig. 6.

Hereinafter, the present invention will be described in detail with reference to the accompanying drawings.

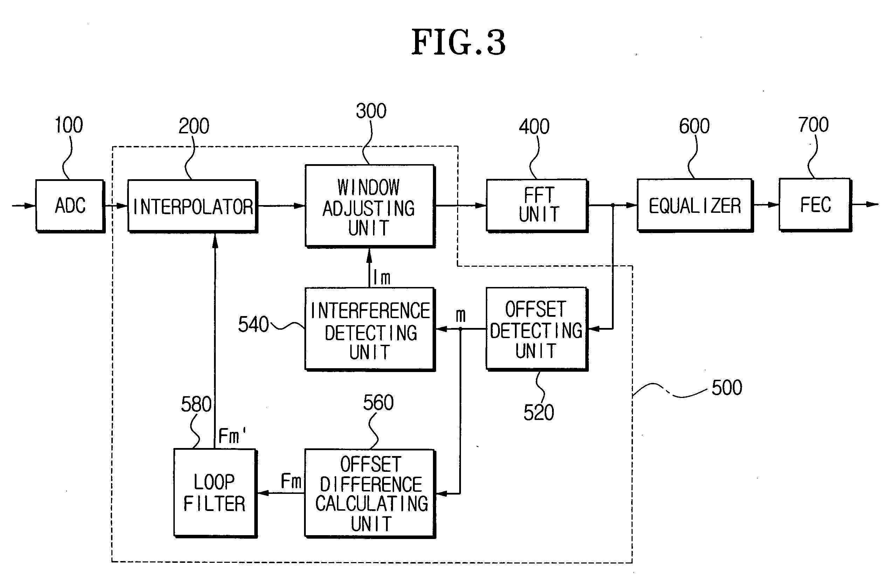

Fig. 3 is a block diagram for showing a symbol timing recovery apparatus of an OFDM receiver according to an embodiment of the present invention. Prior to the description of the symbol timing recovery apparatus according to an embodiment of the present invention, a brief description for the OFDM receiver is made.

In Fig. 3, the OFDM receiver has an analog to digital converter(ADC) 100, a symbol timing recovery device 500, a fast Fourier transforming (FFT) unit 400, an equalizer 600, and a forward error corrector (FEC) 700.

The ADC 100 converts a received OFDM signal into a digital signal through sampling, quantization, and coding. The symbol timing recovery device 500 adjusts a window start point for the fast Fourier transform of the OFDM signal and sampling offsets generated in the sampling process of the OFDM signal in the ADC 100. The FFT unit 400 carries out the fast Fourier transform as to the OFDM signal based on the window start point adjusted in the symbol timing recovery device 500. The equalizer 600 compensates distortions occurring in a transmission channel as to the fast-Fourier-transformed OFDM signal outputted from the FFT unit 400. At this time, the equalizer 60 calculates timing errors and frequency error values as to the symbols of the OFDM signal occurring in the transmission channel through a pilot signal and then compensates the distortions of the OFDM signal in the transmission channel. The FEC 700 detects an error by an error detection mode set as to the data of the OFDM signal, and corrects the errors of the detected data.

Described is the symbol timing recovery device 500 of the OFDM receiver according to an embodiment of the present invention with reference to Fig. 3. The symbol timing recovery device 500 detects and adjusts the sampling offsets of the OFDM signal occurring in a sampling process of the OFDM signal and the offset of a window start point used for the fast Fourier transform of the FFT unit 400. As shown in Fig. 3, the symbol timing recovery device 500 has an offset detector 520, an interference detector 540, an offset difference calculator 560, and a loop filter 580.

The offset detector 520 detects the symbol timing offset values m of the OFDM signal occurring from the fast Fourier transform of the FFT unit 400 and the sampling of the ADC 100. The interference detector 540 detects the inter-symbol interference(ISI) of the OFDM signal from the symbol timing offset values m detected from the offset detector 520. At this time, the inter-symbol interference that the interference detector 540 detects is an integer value Im. Accordingly, the interference detector 540 provides the detected integer value Im to the window adjuster 300. The window adjuster 300 adjusts a window timing for the fast Fourier transform of the OFDM signal of the FFT unit 400 based on the integer value Im provided from the interference detector 540. That is, if the integer value Im is a positive value, the window adjuster 300 determines that the inter-symbol interference occurs and adjusts the window timing, and, if the integer value Im is '0' and negative value, the window adjuster 300 determines that the inter-symbol interference does not occur.

The offset difference calculator 560 subtracts the first symbol timing offset value m1 from the second symbol timing offset value m2 as to the first symbol timing offset value m1 and the second symbol timing offset value m2 sequentially inputted out of the symbol timing offset values m detected from the offset detector 520 to calculated sampling timing offset values. At this time, the sampling timing offset values calculated from the offset difference calculator 560 are decimal values Fm. The loop filter 580 attenuates the decimal values Fm into the values within a predetermined range in order for the differences of the variations among the sequentially calculated decimal values Fm to be smoothly maintained, and then provides the attenuated values Fm' to the interpolator 200. Therefore, the interpolator 200 compensates the errors generated upon the sampling of the ADC 100 based on the decimal values Fm' provided from the loop filter 580.

Accordingly, the window adjuster 300 determines whether or not the window timing offsets occur based on the integer values Im detected through the symbol timing offset values m in the interference detector 540 and then adjusts the window timing, and compensates the sampling timing based on the decimal values Fm outputted via the offset difference calculator 560 and the loop filter 580, thereby enabling the OFDM signal to be more stably recovered.

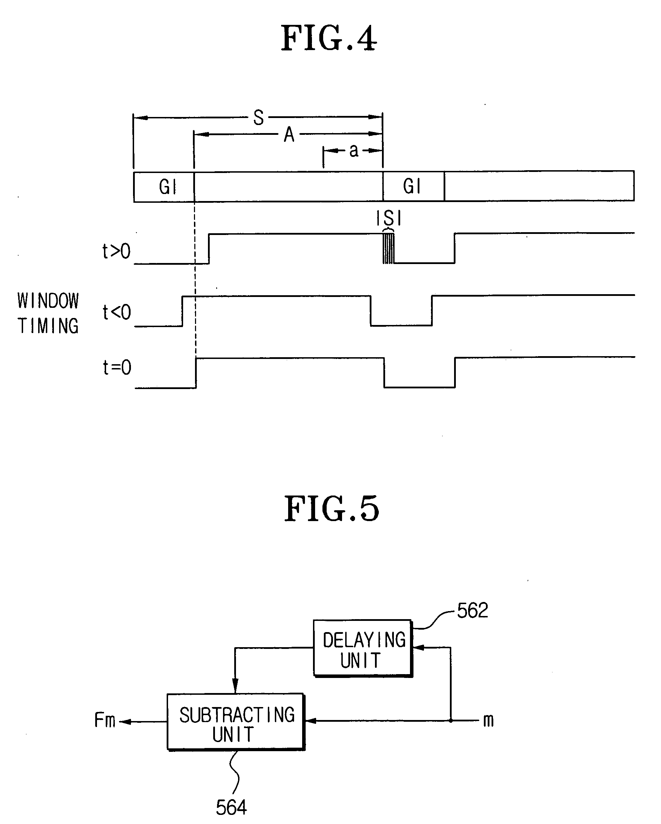

Fig. 4 is a view for briefly showing a symbol structure of an OFDM signal. As shown in Fig. 4, a symbol S of the OFDM signal has a data interval A corresponding to data to be transmitted and a guard interval GI having a rear portion a of the data interval A copied in front of the data interval A.

At this time, in case that a point at which the guard interval GI and the data interval A are connected is a reference point '0', if a start point t of the window timing appears following the guard interval(t>0), an inter-symbol interference occurs. At this time, The FFT unit 400 carries out the fast Fourier transform based on a wrong window timing, so a performance deterioration takes place due to the recovery of the OFDM signal. Therefore, the interference detector 540 detects and provides to the window adjuster 300 an integer value Im corresponding to the positive value corresponding to the inter-symbol interference based on the symbol timing offset values m. Accordingly, the window adjuster 300 adjusts a start point t of the window timing within the guard interval GI in order to remove the inter-symbol interference.

In the meantime, in case that a point at which the guard interval GI and the data interval A are connected is the reference point '0' and the start point t of the window timing is within the guard interval GI ($t \leq 0$), the data in the data interval A is inputted in the FFT unit 400, so the inter-symbol interference does not occur. At this time, the interference detector 540 detects and provides the window adjuster 300 with value '0' or negative (-) integer values Im. In such a case, even though the window adjuster 300 does not adjust the start point t of the window timing to a point of t=0, the FFT unit 400 is able to correctly carry out the fast Fourier transform as to the OFDM signal.

Fig. 5 is a block diagram for showing in detail the offset difference calculator 560 of Fig. 3. The offset difference calculator 560 has a delaying unit 562 and a subtraction part 564. The delaying unit 562 delays for a predetermined time period and outputs the first symbol timing offset value m1 already inputted out of the symbol timing offset values m outputted from the offset detector 520 until the second symbol timing offset value m2 consecutive to the first symbol timing offset value m1 is inputted, and the subtraction part 564 subtracts the first symbol timing offset value m1 from the second symbol timing offset value m2 if the second symbol timing offset value m2 is inputted as in Formula 1 as below.

[Formula 1]

$$Fm = m_1 - m_0$$

At this time, the subtraction part 564 produces values with the subtraction, which are the decimal values Fm. Therefore, the loop filter 580 attenuates the decimal values Fm outputted from the subtraction part 564 into the values within a predetermined range and provides the interpolator 200 with the attenuated values Fm'.

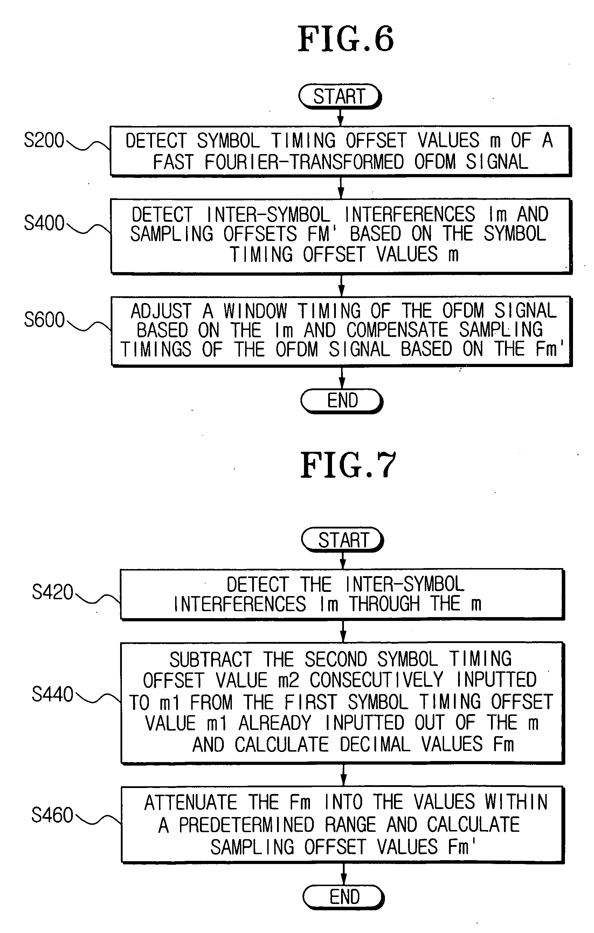

Fig. 6 is a flow chart for showing a symbol timing recovery method using a symbol timing recovery device according to an embodiment of the present invention.

First, the offset detector 520 detects symbol timing offset values m from a fast Fourier-transformed OFDM signal(S200). Accordingly, the interference detector 540 detects inter-symbol interferences Im of the OFDM signal based on the symbol timing offset values m, and the offset difference calculator 560 and the loop filter 580 calculate the sampling offsets Fm' of the OFDM signal (S400). The interpolator 200 compensates a sampling timing in accordance with the sampling offsets occurring to the OFDM signal based on the sampling offsets Fm', and the window adjuster 300 adjusts a window timing of the OFDM signal based on the inter-symbol interference Im (S600).

Accordingly, the interpolator 200 and the window adjuster 300 compensate and adjust the sampling timing and the window timing of the OFDM signal based on the sampling offsets Fm' and the inter-symbol interferences Im, to thereby enable the OFDM signal to be more stably recovered.

Fig. 7 is a flow chart for showing in detail the step S400 of Fig. 6. The interference detector 540 detects the integer values Im corresponding to the inter-symbol interference through the symbol timing offset values m detected from the offset detector 520(S420). Further, the offset difference calculator 560 subtracts the second symbol timing offset value m2 successively inputted to the first symbol timing offset value m1 from the already inputted first symbol timing offset value m1 out of the symbol timing offset values m detected from the offset detector 520 and then calculates the decimal value Fm(S440). At this time, the loop filter 580 attenuates the respective decimal values Fm into the values within a predetermined range for smooth variations between the decimal values Fm the offset difference calculator 560 calculates and then calculates the sampling offset values Fm' (S460).

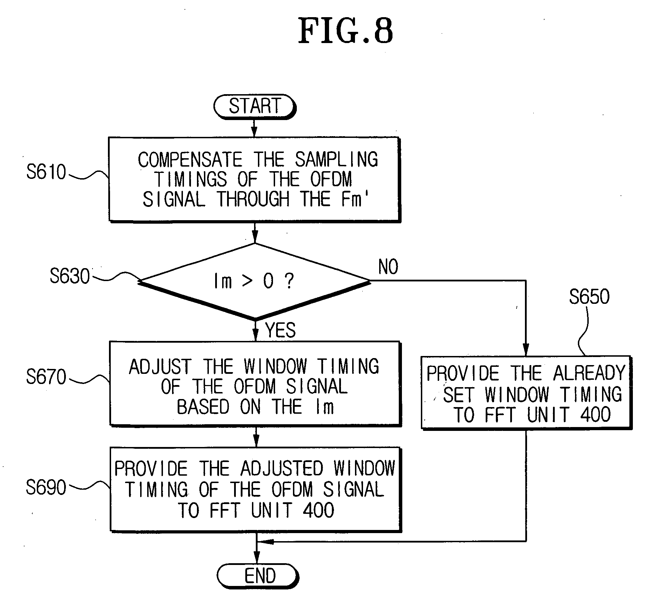

Fig. 8 is a flow chart for showing in detail the step S600 of Fig. 6. First, the interpolator 200 compensates the sampling timing of the OFDM signal through the sampling offset values Fm' outputted from the loop filter 580(S610).

In the meantime, the window adjuster 300 determines whether or not the integer values Im corresponding to the inter-symbol interference outputted from the interference detector 540 is larger than '0' (S630). In the step S630, if it is determined that the integer values Im are not larger than '0', the window adjuster 300 provides the FFT unit 400 with the OFDM signal and the window timing already set for the OFDM signal (S650). According to this, the FFT unit 400 carries out the fast Fourier transform as to the OFDM signal inputted according to the already set window timing and then provides the equalizer 600 with the fast Fourier-transformed OFDM signal.

In the step S630, if it is determined that the integer values Im are larger than '0', the window adjuster 300 adjusts the window timing of the OFDM signal based on the integer values Im(S670). At this time, the window adjuster 300 provides the FFT unit 400 with the OFDM signal and the window timing adjusted for the OFDM signal(S690). According to this, the FFT unit 400 carries out the fast Fourier transform as to the OFDM signal in accordance with the adjusted window timing and provides the equalizer 600 with the fast Fourier-transformed OFDM signal.

Accordingly, the OFDM signal can be more stably and correctly recovered by detecting the sampling offsets and the inter-symbol interferences as to the OFDM signal through the symbol timing values m, compensating and adjusting the sampling timing and the window timing. Further, The OFDM signal can be more stably recovered in the fixed channel environments as well as in the dynamic channel environments which vary the channel environments.

With the present invention, the interpolator and the window adjuster compensate and adjust the sampling timing and the window timing of the OFDM signal based on the sampling offsets and the inter-symbol interference, so the OFDM signal can be more stably recovered.

Further, the window adjuster determines whether or not the window timing offsets occur based on the integer values corresponding to the inter-symbol interferences provided from the interference detector and then adjusts the window timing, and the interpolator compensates the sampling timing based on the decimal values provided via the offset difference calculator and the loop filter, so that the OFDM signal transmitted in the fixed channel environments and in the dynamic channel environments can be more stably and correctly recovered.

Although the preferred embodiment of the present invention has been described, it will be understood by those skilled in the art that the present invention should not be limited to the described preferred embodiment.

**Claims**

1. An apparatus (500) for recovering symbol timings in an OFDM receiver, comprising:

    an offset detecting unit (520) for estimating symbol timing offset values from a fast Fourier-transformed OFDM signal;

    an interference detecting unit (540) for using the symbol timing offset values and detecting an inter-symbol interferences of the OFDM signal;

    an offset difference calculating unit (560) for subtracting a second symbol timing offset value consecutive to a first symbol timing offset value from the first symbol timing offset value already inputted from the symbol timing offset values and calculating sampling offsets of the OFDM signal;

    an interpolator (200) for compensating a sampling timing of the OFDM signal in accordance with the sampling offsets calculated from the offset difference calculating unit; and

    a window adjusting unit (300) for adjusting a window timing of the OFDM signal based on the inter-symbol interferences detected from the interference detecting unit.

2. The apparatus as claimed in claim 1, wherein the offset difference calculating unit includes:

    a delaying unit (562) for delaying for a predetermined time period and outputting the first symbol timing offset value already inputted out of the symbol timing offset values detected from the offset detecting unit until the second symbol timing offset value consecutive to the first symbol timing offset value is inputted; and

    a subtraction part (564) for subtracting the first symbol timing value from the second symbol timing offset value and calculating the sampling offsets of the OFDM signal.

3. The apparatus as claimed in claim 2 or 3, further comprising a loop filter (580) for attenuating the sampling offsets into values within a predetermined range in order to smoothly maintain variation differences among the sequentially adjacent sampling offsets calculated from the subtraction part and providing the attenuated values to the interpolator.

4. The apparatus as claimed in claim 3, wherein the inter-symbol interferences detected from the interference detecting unit are integer values, and the sampling offsets attenuated from the loop filter are decimal values.

5. The apparatus as claimed in claim 4, wherein the window adjusting unit adjusts the window timing of the OFDM signal according to the integer values if the integer values corresponding to the inter-symbol interferences detected from the interference detecting unit are larger than '0'.

6. An OFDM receiver, comprising:

    an analog-to-digital converter (100) for converting a received OFDM signal to a digital signal;

    a fast Fourier transform part (400) for carrying out a fast Fourier transform of the OFDM signal being the digital signal;

    an offset detecting unit (520) for detecting the symbol timing offset values from the fast Fourier-transformed OFDM signal;

an interference detecting unit (540) for detecting the inter-symbol interferences of the OFDM signal by using the symbol timing offset values;

an offset difference calculating unit (560) for subtracting a second symbol timing offset value consecutive to a first symbol timing offset value from the first symbol timing offset value already inputted from the symbol timing offset values and calculating sampling offsets of the OFDM signal;

an interpolator (200) for compensating a sampling timing of the OFDM signal in accordance with the sampling offsets calculated from the offset difference calculating unit;

a window adjusting unit (300) for adjusting a window timing of the OFDM signal based on the inter-symbol interferences detected from the interference detecting unit; and

an equalization part (600) for compensating transmission distortions as to the fast Fourier-transformed OFDM signal in accordance with channel environments.

7. The OFDM receiver as claimed in claim 6, wherein the offset difference calculating unit includes:

a delaying unit (562) for delaying for a predetermined time period and outputting the first symbol timing offset value already inputted out of the symbol timing offset values detected from the offset detecting unit until the second symbol timing offset value consecutive to the first symbol timing offset value is inputted; and

a subtraction part (564) for subtracting the first symbol timing value from the second symbol timing offset value and calculating the sampling offsets of the OFDM signal.

8. The OFDM receiver as claimed in claim 7, further comprising a loop filter (580) for attenuating the sampling offsets into values within a predetermined range in order to smoothly maintain variation differences among the sequentially adjacent sampling offsets calculated from the subtraction part and providing the attenuated values to the interpolator.

9. The OFDM receiver as claimed in claim 8, wherein the inter-symbol interferences detected from the interference detecting unit are integer values, and the sampling offsets attenuated from the loop filter are decimal values.

10. The OFDM receiver as claimed in claim 9, wherein the window adjusting unit adjusts the window timing of the OFDM signal according to the integer values if the integer values corresponding to the inter-symbol interferences detected from the interference detecting unit are larger than '0'.

11. A method for recovering symbol timings in use of a symbol timing recovery device, comprising steps of:

detecting symbol timing offset values from a fast Fourier-transformed OFDM signal;

detecting an inter-symbol interferences of the OFDM signal based on the symbol timing offset values;

subtracting a second symbol timing offset value consecutive to a first symbol timing offset value from the first symbol timing offset value already inputted from the symbol timing offset values and calculating sampling offsets of the OFDM signal;

compensating a sampling timing of the OFDM signal in accordance with the sampling offsets; and

adjusting a window timing of the OFDM signal based on the inter-symbol interferences.

12. The method as claimed in claim 11, wherein the step for calculating the sampling offsets includes steps of:

delaying for a predetermined time period and outputting the first symbol timing offset value already inputted out of the symbol timing offset values detected from the offset detecting unit until the second symbol timing offset value consecutive to the first symbol timing offset value is inputted; and

subtracting the first symbol timing value from the second symbol timing offset value and calculating the sampling offsets of the OFDM signal.

13. The method as claimed in claim 12, further comprising, after the step for calculating the sampling offsets, a step for attenuating the sampling offsets into values within a predetermined range in order to smoothly maintain variation differences among the sequentially adjacent sampling offsets, wherein the compensation step compensates the sampling timing of the OFDM signal based on the attenuated sampling offsets.

14. the method as claimed in claim 13, wherein the inter-symbol interferences are integer values, and the sampling offsets are decimal values.

15. The method as claimed in claim 14, wherein the step for adjusting the window timing adjusts the window timing of the OFDM signal according to the integer values if the integer values corresponding to the inter-symbol interferences are larger than '0'.

# FIG.1

EP 1 331 783 A2

# FIG.2

# FIG.3

EP 1 331 783 A2

# FIG.4

# FIG.5

# FIG.6

START

S200 — DETECT SYMBOL TIMING OFFSET VALUES m OF A FAST FOURIER-TRANSFORMED OFDM SIGNAL

S400 — DETECT INTER-SYMBOL INTERFERENCES Im AND SAMPLING OFFSETS FM' BASED ON THE SYMBOL TIMING OFFSET VALUES m

S600 — ADJUST A WINDOW TIMING OF THE OFDM SIGNAL BASED ON THE Im AND COMPENSATE SAMPLING TIMINGS OF THE OFDM SIGNAL BASED ON THE Fm'

END

# FIG.7

START

S420 — DETECT THE INTER-SYMBOL INTERFERENCES Im THROUGH THE m

S440 — SUBTRACT THE SECOND SYMBOL TIMING OFFSET VALUE m2 CONSECUTIVELY INPUTTED TO m1 FROM THE FIRST SYMBOL TIMING OFFSET VALUE m1 ALREADY INPUTTED OUT OF THE m AND CALCULATE DECIMAL VALUES Fm

S460 — ATTENUATE THE Fm INTO THE VALUES WITHIN A PREDETERMINED RANGE AND CALCULATE SAMPLING OFFSET VALUES Fm'

END

# FIG.8

START

**S610** — COMPENSATE THE SAMPLING TIMINGS OF THE OFDM SIGNAL THROUGH THE Fm'

**S630** — Im > 0 ?

NO → **S650** — PROVIDE THE ALREADY SET WINDOW TIMING TO FFT UNIT 400

YES → **S670** — ADJUST THE WINDOW TIMING OF THE OFDM SIGNAL BASED ON THE Im

**S690** — PROVIDE THE ADJUSTED WINDOW TIMING OF THE OFDM SIGNAL TO FFT UNIT 400

END